# EUROPEAN PATENT SPECIFICATION

(11) **EP 2 832 984 B1**
(45) Date of publication and mention of the grant of the patent: **10.10.2018**
(21) Application number: 13290177.8
(22) Date of filing: 29.07.2013
(51) Int. Cl.: F02M 35/10, F02B 33/44

(54) **Flange connection**
Flanschverbindung
Raccord à bride

(43) Date of publication of application: 04.02.2015
(73) Proprietor: MANN+HUMMEL GmbH, 71636 Ludwigsburg (DE)
(72) Inventor: Foulboeuf, Gwenael, 53260 Entrammes (FR)

(56) References cited:
- EP-A1- 0 093 845
- EP-A1- 0 278 071
- DE-A1- 10 007 432
- FR-A1- 2 931 907

## Description

### TECHNICAL FIELD

The present invention relates to an arrangement for fastening parts in which a medium flows.

More particularly, it relates to a sealed flat flange connection between two parts, such as pipes, valves and other flow devices, of a combustion engine, particular of a motor vehicle or a stationary engine.

### BACKGROUND OF THE INVENTION

In an internal combustion engine, the parts of an air intake system are submitted to strong thermo-mechanical stress as the engine warms up, in particular at the level of the connecting elements between parts.

The EP 0 278 071 A1 presents an intake pipe system for an opposed piston or V-engine consisting of a U-shaped collector intake pipe at whose two U-legs individual intake pipes are mounted to the two banks of cylinders. In order to be able to balance manufacturing tolerances of the engine and temperature-caused changes of length of the intake pipe system, a sealed-off separating device is provided between a right and a left U-leg. With respect to U-leg, one leg part closes off with an end flange. On the front face, a sealing ring carries a seal and at the circumference, it has an O-ring in a ring groove that has a sealing effect with respect to a pipe expansion of the other leg part.

In other concepts, for instance, the metallic outlet flange of a turbo compressor is classically fitted to the flange of a thermoplastic duct using a flat flange connection.

Such a connection comprises screws which are placed through symmetrically disposed holes in the flange of each part and an axial sealing gasket (e.g. an O-ring) which is compressed between the flanges in order to seal the connection axially.

In other words, the screws ensure mechanical assembly of the abutting flanges, and the axial sealing gasket is used to ensure the tightness of the flat flange connection of the metallic and plastic parts.

Any deformation of the plastic flange of the duct, due in particular to pressure, temperature, mechanical stresses and creeping, generates a loss of sealing compression, and thus a risk of leakage.

Such a tightness solution for a flat flange connection is thus not totally satisfying because deformations of the connected parts provoke leakages.

### SUMMARY OF THE INVENTION

The purpose of the present invention is to remedy these drawbacks by proposing a flange connection between a first duct and a second duct of an combustion engine, particular of a motor vehicle, comprising a first flange located on one end of said first duct, a second flange located on one end of said second duct and connecting means for axially tightening the first and second abutting flanges, characterized in that it comprises first sealing means for radially sealing said flange connection and interface means configured to be mounted on said first flange and to come into contact with the abutting face of said second flange, said interface means comprising second sealing means for axially sealing said flange connection.

The invention proposes an improved flat flange connection assembly for fastening tubular components or parts of an internal combustion engine of a motor vehicle, in particular a first plastic part, such as a thermoplastic duct, and a second metallic part, such as a pipe or duct of a turbo compressor or turbo charger.

The concept of the present invention aims at decoupling and separating the mechanical assembly function and the sealing function in such a flat flange connection between two parts.

The flange of the first part is modified, i.e. it is provided with a mechanical interface, the second part presenting a classic flange.

The interface is designed to be sandwiched between the abutted flanges. The two sealing areas ensure axial and radial tightness and increased leakage resistance in the region of the junction of the flanged-together pipe parts.

In accordance with another aspect of the present invention, said first flange is in plastics, e.g. made from thermoplastic material, e.g. polyamide or polypropylene, particularly filled with glasfibers and/or minerals, and said second flange is in a heat-resistant material, e.g. metal, e.g. aluminum or cast iron.

The present invention may be applied in a flat flange connection between a first plastic part and a second part made of a different material, such as metal.

In accordance with another aspect of the present invention, said interface means are at least partly in a heat-resistant material.

In accordance with another aspect of the present invention, said interface means comprises a third flange.

Mechanical assembly is achieved using a third flange, in metal for instance, which is fitted between the flanges of the two parts and screws which ensure longitudinal pressure urging the abutting tubular sections of the two parts together along the axes of the tubular sections.

Sealing is achieved using a sealing gasket and a sheet gasket, the latter being fitted between the flanges of the two parts. The sealing gasket is used to ensure the radial tightness between the plastic part and the metallic flange of the other part to be assembled, the sheet gasket ensuring the axial tightness between the plastic part and the metallic flange of the other part.

Such a connection is also easy to assemble and quickly detachable, and compatible with current flange designs for combustion engines, particular in the automotive industry.

In accordance with another aspect of the present invention, said third flange carries said first sealing means.

In accordance with another aspect of the present invention, said interface means comprises a sheet gasket configured to be mounted between said third flange and said second flange.

In accordance with another aspect of the present invention, said third flange carries said second sealing means.
In an alternative, said sheet gasket carries said second sealing means.
In accordance with another aspect of the present invention, said second sealing means comprise one or more circular projections configured to come into contact with the abutting surface of said second flange.

In accordance with another aspect of the present invention, said first flange comprises a housing surrounding the flow channel of said first duct for accommodating said first sealing means.

In accordance with another aspect of the present invention, said first sealing means comprise an annular seal.

In accordance with another aspect of the present invention, said third flange comprises maintaining means defining with said housing a groove for said first sealing means.

In accordance with another aspect of the present invention, said sheet gasket comprises retaining means configured to removably fasten said sheet gasket on said first flange.

In accordance with another aspect of the present invention, retaining means comprise several brackets designed to snap said sheet gasket on said first flange.

### BRIEF DESCRIPTION OF THE DRAWINGS

The features of the flat flange connection arrangement which is the subject of the invention are described in greater detail by referring to the attached non limiting drawings in which:
Figure 1 is a perspective view of two parts of an internal combustion engine of a motor vehicle which are assembled using a flat flange connection assembly according to the present invention;
Figure 2 is a section view of the flat flange connection assembly of Figure 1;
Figure 3 is an exploded view of some of the components implemented in the flat flange connection assembly according to the present invention, and
Figure 4 is a perspective view of the components of Figure 3 when assembled.

### DETAILED DESCRIPTION

A detailed description of an exemplary embodiment of the invention follows with reference to the figures provided.

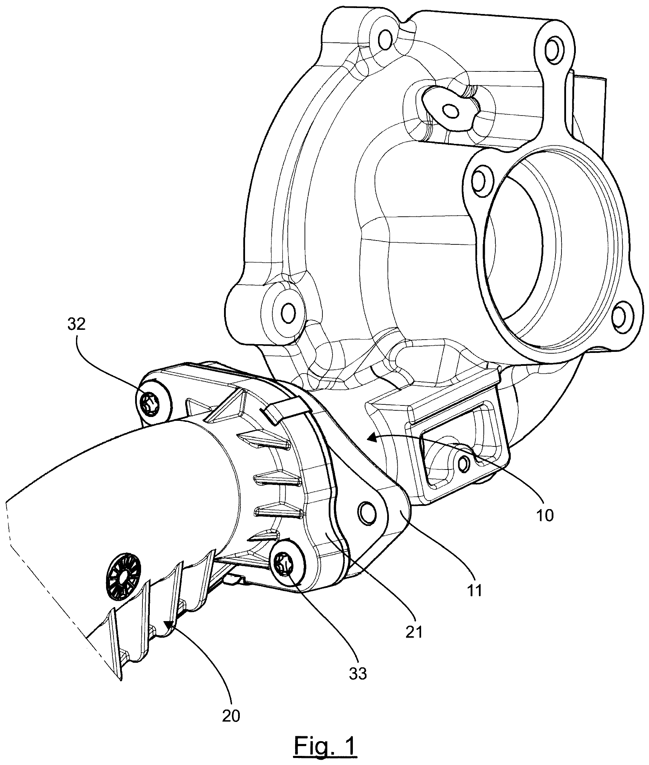

Figure 1 shows a detachable flat flange connection between two parts of an air intake system of a motor vehicle.
In this particular example, the outlet pipe 10 of a turbo compressor or turbo charger of an internal combustion engine is ended by a flange 11, which is fitted to a flange 21 located on an end section of a thermoplastic duct 20.
The material of the outlet pipe 10 is metal, the flange 21 being in thermoplastics. The abutting faces of the flanges 11, 21 are flat.

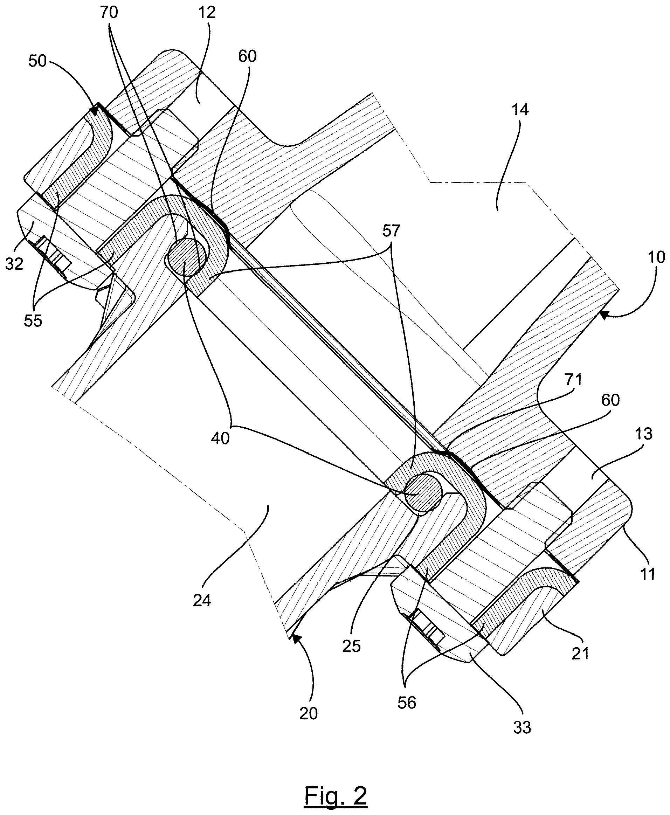

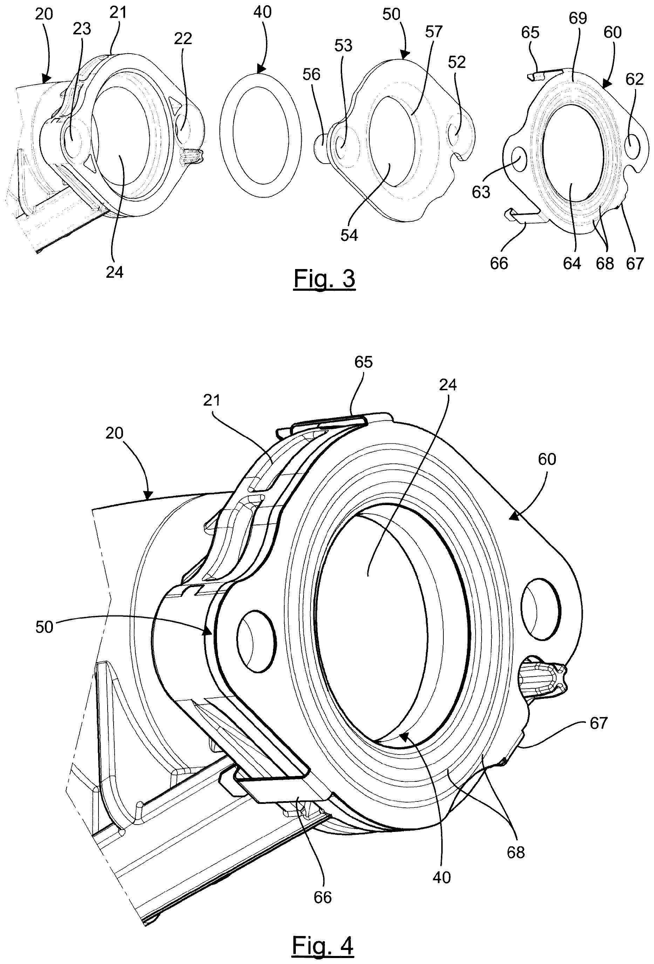

As illustrated in Figures 2 and 3, the flange 11 of outlet pipe 10 comprises two symmetrically disposed threaded through-holes 12, 13 and the flange 21 of thermoplastic duct 20 comprises two symmetrically disposed through-holes 22, 23 for a screw or bolt connection to flange 11.
The tight connecting assembly connecting end to end the thermoplastic duct 20 to the outlet pipe 10 comprises a radial sealing gasket 40 fitted in the flange 21.
It further comprises a metallic flange 50 and a sheet gasket 60 which are fitted between the flanges 11, 21 before the axial tightening screws 32, 33 are fitted in corresponding through-holes 12, 13 and 22, 23 in order to fasten the flanges 11 and 21, and thus the thermoplastic duct 20 to the metal outlet pipe 10.

It is to be noted that for reasons of clarity, screws 32, 33 are not represented in Figures 3 and 4.
The radial sealing gasket 40 is, in this example, an O-ring or a toric joint of a material which is elastic (an elastomeric material preferably) and resistant against the medium, i.e. air, conducted through the flow channels 14, 24. The radial sealing gasket 40 is fitted in an internal circular housing, or support, 25 of the plastic flange 21, i.e. it is accommodated inside the flange 21.

The housing 25 is configured so as to support therein the gasket 40 and surrounds the channel 24 in which the medium flows.

As illustrated in Figure 3, a metallic flange 50 of symmetrical circular shape comprises a circular opening 54 for passage of flowable medium and two ears from which extend tubular pins 55, 56. Through-holes 52, 53 are defined in tubular pins 55, 56 respectively. The diameter of the tubular pins 55, 56 is chosen so that they fit inside the through-holes 22, 23 of plastic flange 21 when the metallic flange 50 is abutted against the flat face of the plastic flange 21. The pins 55, 56 are used to replace the usual metallic bushing needed to keep the tightening torque, and avoid unscrewing due to plastic (21) creeping. The circular opening 54 of the metallic flange 50 is surrounded by a curved skirt 57, which extends in the same direction as the tubular pins 55, 56. When the metallic flange 50 is abutted against the flat face of the plastic flange 21, the skirt 57 maintains the sealing gasket 40 in position inside the housing 25 of the flange 21, ensuring radial sealing of the tight connecting assembly of the invention. The skirt 57 of metallic flange 50 and the housing 25 of flange 21 define a groove or channel in which the sealing gasket 40 is compressed ensuring sealing (as illustrated by reference number 70 in Figure 2) between the metallic flange 50 and the thermoplastic duct 20.

The steel sheet or flat gasket 60 is of circular shape and comprises a circular opening 64 for passage of flowable medium. It further comprises ears in which are disposed through-holes 62, 63, and three fastening or retaining clips or brackets 65, 66, 67 extending in a direction perpendicular to the surface of the sheet gasket 60.
The fastening clips 65, 66, 67 are arranged to removably fasten the sheet gasket 60 on the flange 21 of the duct 20, the metallic flange 50 being placed between the flange 21 and the sheet gasket 60.
It is to be noted that the sheet gasket 60 comprises one or more lips or projections (two projections 68 in this example) on the surface 69 that are designed to be urged against the flat face of flange 11 of outlet pipe 10. These projections 68 ensure axial sealing of the tight connecting assembly of the invention (the sealing between the metallic flange 50 and the pipe 10 is illustrated by reference number 71 in Figure 2).
Once the sheet gasket 60 is mounted on the plastic flange 21 (as illustrated in Figure 4) urging the metallic flange 50 against the flat face of the plastic flange 21, screws 32, 33 are inserted in the holes 22, 23 of duct 20, then through holes 52, 53 and 62, 63 of the metallic flange 50 and sheet gasket 60 respectively. The extremity of screws 32, 33 is retained in threaded holes 12, 13 of the classic flange 11 of outlet pipe 10 to form a mechanical connection between abutted flanges 11, 21 of opposed pipe 10 and duct 20. The plastic part 20 is retained by the head of each screw 32, 33.
In summary, the tight connecting assembly of the present invention implements two sealing areas.
The compressed inner sealing gasket 40 allows radial sealing between metallic flange 50 and channel 24 of plastic part 20.
The metallic outer sheet gasket 60 ensures axial sealing between the parts 10, 20 in which the medium flows and the metallic flange 50.
Mechanical assembly of the metallic pipe 10 and of the plastic duct 20 is ensured by the metallic flange 50, and tightness of the connection is ensured by the sealing gasket 40 (radial tightness) and the metallic sheet gasket 60 (axial tightness).
Because the flange 50 is in metal, it is not much subject to deformation (less than plastic in any case). Thus, contrary to the classical flat flange connection, tightness is not directly linked to the mechanical assembly device.

A further advantage of the invention is that the use of a radial gasket allows a decoupling of the flat flange connection. Indeed, even if the plastic part, i.e. plastic duct 20, happens to be deformed because of creeping, temperature and/or pressure for instance, the assembly offers good protection against leakage.
Another advantage is that the solution of the invention is compatible with current and standard flange design.
Such a connection is also easy to assemble and quickly detachable,
In an alternative embodiment, the metallic flange 50 is provided with the sealing projections ensuring axial tightness of the flange connection so that the latter does not require the use of the sheet gasket 60.
It is to be noted that the sealing gasket 40 may be mounted (or be part of) on the outside periphery of skirt 57 before assembly of the connection.
Each of the flanges 11, 21 may be located on one end of a straight or bent (elbow type) segment of any part of an engine, e.g. an internal combustion engine, of a motor vehicle. The flange 50 is in metal or any other heat-resistant material such as a ceramic or graphite material.

The sheet gasket 60 may be in steel or any other heat-resistant material such as a ceramic or graphite material.
The medium flowing inside the duct 20 and pipe 10 could be combustion air, compressed by the turbo charger running to the charge air cooler, the intake manifold or the combustion chamber or exhaust gas leaving the engine.

## Claims

1. A flange connection between a first duct (20) and a second duct (10) of an engine, comprising a first flange (21) located on one end of said first duct (20), a second flange (11) located on one end of said second duct (10) and connecting means (32, 33) for axially tightening the first and second abutting flanges (11, 21), **characterized in that** the flange connection comprises first sealing means (40) for radially sealing said flange connection and interface means (50, 60) configured to be mounted on said first flange (21) and to come into contact with the abutting face of said second flange (11), said interface means (50, 60) comprising second sealing means (60) for axially sealing said flange connection.

2. A flange connection according to claim 1, **characterized in that** said first flange (21) is in plastics e.g. thermoplastic material and said second flange (11) is in a heat-resistant material, e.g. cast iron.

3. A flange connection according to claim 2, **characterized in that** said interface means (50, 60) are at least partly in a heat-resistant material, e.g. metal.

4. A flange connection according to any of claims 1 to 3, **characterized in that** said interface means comprises a third flange (50).

5. A flange connection according to claim 4, **characterized in that** said third flange (50) carries said first sealing means (40).

6. A flange connection according to claim 4 or 5, **characterized in that** said interface means comprises a sheet gasket (60) configured to be mounted between said third flange (50) and said second flange (11).

7. A flange connection according to claim 4 or 5, **characterized in that** said third flange (50) carries said second sealing means (60).

8. A flange connection according to claim 6, **characterized in that** said sheet gasket (60) carries said second sealing means (60).

9. A flange connection according to any of claims 1 to 8, **characterized in that** said second sealing means (60) comprise one or more circular projections configured to come into contact with the abutting surface of said second flange (11).

10. A flange connection according to any of claims 1 to 9, **characterized in that** said first flange (21) comprises a housing (25) surrounding the flow channel (24) of said first duct (20) for accommodating said first sealing means (40).

11. A flange connection according to any of claims 1 to 10, **characterized in that** said first sealing means (40) comprise an annular seal.

12. A flange connection according to any of claims 4 to 11, **characterized in that** said third flange (50) comprises maintaining means (57) defining with said housing (25) a groove for said first sealing means (40).

13. A flange connection according to claim 6, **characterized in that** said sheet gasket (60) comprises retaining means configured to removably fasten said sheet gasket (60) on said first flange (21).

14. A flange connection according to claim 13, **characterized in that** said retaining means comprise several brackets designed to snap said sheet gasket (60) on said first flange (21).

15. A flange connection according to any of claims 1 to 14, **characterized in that** the first duct (20) and the second duct (10) are ducts of a combustion engine guiding air downstream from a compressor or air charger.

## Patentansprüche

1. Flanschverbindung zwischen einem ersten Kanal (20) und einem zweiten Kanal (10) eines Motors, umfassend einen ersten Flansch (21), der an einem Ende des ersten Kanals (20) angeordnet ist, einen zweiten Flansch (11), der an einem Ende des zweiten Kanals (10) angeordnet ist, und Verbindungseinrichtungen (32, 33) zum axialen Anziehen des ersten und des zweiten anliegenden Flansches (11, 21), **dadurch gekennzeichnet, dass** die Flanschverbindung eine erste Dichtungseinrichtung (40) zum radialen Abdichten der Flanschverbindung und Schnittstelleneinrichtungen (50, 60) umfasst, die so ausgelegt sind, dass sie an dem ersten Flansch (21) angebracht werden und mit der Anlagefläche des zweiten Flansches (11) in Kontakt kommen, wobei die Schnittstelleneinrichtungen (50, 60) eine zweite Dichtungseinrichtung (60) zum axialen Abdichten der Flanschverbindung umfassen.

2. Flanschverbindung nach Anspruch 1, **dadurch gekennzeichnet, dass** der erste Flansch (21) aus Kunststoff, z.B. Thermoplast, und der zweite Flansch (11) aus einem hitzebeständigen Material, z.B. Gusseisen, hergestellt ist.

3. Flanschverbindung nach Anspruch 2, **dadurch gekennzeichnet, dass** die Schnittstelleneinrichtungen (50, 60) wenigstens teilweise aus hitzebeständigem Material, z.B. Metall, hergestellt sind.

4. Flanschverbindung nach einem der obigen Ansprüche 1 bis 3, **dadurch gekennzeichnet, dass** die Schnittstelleneinrichtung einen dritten Flansch (50) umfasst.

5. Flanschverbindung nach Anspruch 4, **dadurch gekennzeichnet, dass** der dritte Flansch (50) die erste Dichtungseinrichtung (40) trägt.

6. Flanschverbindung nach Anspruch 4 oder 5, **dadurch gekennzeichnet, dass** die Schnittstelleneinrichtung eine Plattendichtung (60) umfasst, die für eine Montage zwischen dem dritten Flansch (50) und dem zweiten Flansch (11) ausgelegt ist.

7. Flanschverbindung nach Anspruch 4 oder 5, **dadurch gekennzeichnet, dass** der dritte Flansch (50) die zweite Dichtungseinrichtung (40) trägt.

8. Flanschverbindung nach Anspruch 6, **dadurch gekennzeichnet, dass** die Plattendichtung (60) die zweite Dichtungseinrichtung (40) trägt.

9. Flanschverbindung nach einem der obigen Ansprüche 1 bis 8, **dadurch gekennzeichnet, dass** die zweite Dichtungseinrichtung (60) einen oder mehrere kreisförmige Vorsprünge umfasst, die für einen Kontakt mit der Anlagefläche des zweiten Flansches (11) ausgelegt sind.

10. Flanschverbindung nach einem der obigen Ansprüche 1 bis 9, **dadurch gekennzeichnet, dass** der erste Flansch (21) ein Gehäuse (25) umfasst, das den Strömungskanal (24) des ersten Kanals (20) für die Aufnahme der ersten Dichtungseinrichtung (40) umschließt.

11. Flanschverbindung nach einem der obigen Ansprüche 1 bis 10, **dadurch gekennzeichnet, dass** die erste Dichtungseinrichtung (40) eine ringförmige Dichtung umfasst.

12. Flanschverbindung nach einem der obigen Ansprüche 4 bis 11, **dadurch gekennzeichnet, dass** der dritte Flansch (50) eine Halteeinrichtung (57) umfasst, welche mit dem Gehäuse (25) eine Nut für die erste Dichtungseinrichtung (40) definiert.

13. Flanschverbindung nach Anspruch 6, **dadurch gekennzeichnet, dass** die Plattendichtung (60) Rückhalteeinrichtungen umfasst, die zum lösbaren Befestigen der Plattendichtung (60) an dem ersten Flansch (21) ausgelegt sind.

14. Flanschverbindung nach Anspruch 13, **dadurch gekennzeichnet, dass** die Rückhalteeinrichtungen mehrere Haltebügel umfassen, die zum Einrasten der Plattendichtung (60) an dem ersten Flansch (21) ausgelegt sind.

15. Flanschverbindung nach einem der Ansprüche 1 bis 14, **dadurch gekennzeichnet, dass** der erste Kanal (20) und der zweite Kanal (10) Kanäle eines Verbrennungsmotors sind, die Luft stromabwärts von einem Kompressor oder einem Luftlader führen.

## Revendications

1. Raccord à bride entre un premier conduit (20) et un second conduit (10) d'un moteur, comprenant une première bride (21) située sur une extrémité dudit premier conduit (20), une deuxième bride (11) située sur une extrémité dudit second conduit (10) et un dispositif de raccordement (32, 33) pour serrer axialement les première et deuxième brides en butée (11, 21), **caractérisé en ce que** le raccord à bride comprend un premier dispositif d'étanchéité (40) pour étancher radialement ledit raccord à bride et des dispositifs d'interface (50, 60) configurés pour être montés sur ladite première bride (21) et pour venir en contact avec la face de butée de ladite deuxième bride (11), lesdits dispositifs d'interface (50, 60) comprenant un second dispositif d'étanchéité (60) pour étancher axialement ledit raccord à bride.

2. Raccord à bride selon la revendication 1, **caractérisé en ce que** ladite première bride (21) est en matières plastiques, par exemple, en une matière thermoplastique et ladite deuxième bride (11) est en un matériau résistant à la chaleur, par exemple, en fonte.

3. Raccord à bride selon la revendication 2, **caractérisé en ce que** lesdits dispositifs d'interface (50, 60) sont au moins partiellement en un matériau résistant à la chaleur, par exemple, en métal.

4. Raccord à bride selon l'une quelconque des revendications 1 à 3, **caractérisé en ce que** ledit dispositif d'interface comprend une troisième bride (50).

5. Raccord à bride selon la revendication 4, **caractérisé en ce que** ladite troisième bride (50) porte ledit premier dispositif d'étanchéité (40).

6. Raccord à bride selon la revendication 4 ou 5, **caractérisé en ce que** ledit dispositif d'interface comprend un joint d'étanchéité plat (60) configuré pour être monté entre ladite troisième bride (50) et ladite deuxième bride (11).

7. Raccord à bride selon la revendication 4 ou 5, **caractérisé en ce que** ladite troisième bride (50) porte ledit second dispositif d'étanchéité (60).

8. Raccord à bride selon la revendication 6, **caractérisé en ce que** ledit joint d'étanchéité plat (60) porte ledit second dispositif d'étanchéité (60).

9. Raccord à bride selon l'une quelconque des revendications 1 à 8, **caractérisé en ce que** ledit second dispositif d'étanchéité (60) comprend une ou plusieurs saillies circulaires configurées pour venir en contact avec la surface de butée de ladite deuxième bride (11).

10. Raccord à bride selon l'une quelconque des revendications 1 à 9, **caractérisé en ce que** ladite première bride (21) comprend un boîtier (25) entourant le canal d'écoulement (24) dudit premier conduit (20) destiné à recevoir ledit premier dispositif d'étanchéité (40).

11. Raccord à bride selon l'une quelconque des revendications 1 à 10, **caractérisé en ce que** ledit premier dispositif d'étanchéité (40) comprend un joint annulaire.

12. Raccord à bride selon l'une quelconque des revendications 4 à 11, **caractérisé en ce que** ladite troisième bride (50) comprend un dispositif de maintien (57) définissant avec le boîtier (25) une rainure pour ledit premier dispositif d'étanchéité (40).

13. Raccord à bride selon la revendication 6, **caractérisé en ce que** ledit joint d'étanchéité plat (60) comprend un dispositif de retenue configuré pour fixer de façon amovible ledit joint d'étanchéité plat (60) sur ladite première bride (21).

14. Raccord à bride selon la revendication 13, **caractérisé en ce que** ledit dispositif de retenue comprend plusieurs supports conçus pour encliqueter ledit joint d'étanchéité plat (60) sur ladite première bride (21).

15. Raccord à bride selon l'une quelconque des revendications 1 à 14, **caractérisé en ce que** le premier conduit (20) et le second conduit (10) sont des conduits d'un moteur à combustion guidant l'air en aval d'un compresseur ou d'un compresseur d'air.
